(19) Europäisches Patentamt
European Patent Office
Office européen des brevets

(11) **EP 4 042 031 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **20788979.1**

(22) Anmeldetag: **30.09.2020**

(51) Internationale Patentklassifikation (IPC):
**F16D 3/12** *(2006.01)*    **F16H 55/36** *(2006.01)*
**F16D 41/20** *(2006.01)*    **F16D 3/72** *(2006.01)*

(52) Gemeinsame Patentklassifikation (CPC):
**F16D 3/12; F16D 3/72; F16D 41/206;** F16H 55/36

(86) Internationale Anmeldenummer:
**PCT/DE2020/100834**

(87) Internationale Veröffentlichungsnummer:
**WO 2021/069020 (15.04.2021 Gazette 2021/15)**

(54) **RIEMENSCHEIBENENTKOPPLER**

BELT PULLEY DECOUPLER

DÉCOUPLEUR DE POULIE À COURROIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2019 DE 102019126867**

(43) Veröffentlichungstag der Anmeldung:
**17.08.2022 Patentblatt 2022/33**

(73) Patentinhaber: **Schaeffler Technologies AG & Co. KG**
**91074 Herzogenaurach (DE)**

(72) Erfinder:
• **KASTNER, Michael**
**91052 Erlangen (DE)**
• **GOETZ, Andreas**
**91489 Wilhelmsdorf (DE)**
• **BAUER, Eugen**
**91074 Herzogenaurach (DE)**

(56) Entgegenhaltungen:
**EP-A1- 0 980 479**    **EP-A2- 0 517 185**
**EP-B1- 0 517 185**    **EP-B1- 0 980 479**
**DE-U1-202018 000 857**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Riemenscheibenentkoppler zur Drehmomentübertragung zwischen dem Riemen eines Riementriebs und einer damit in Antriebsverbindung stehenden Welle, aufweisend:

- eine an der Welle zu befestigende Nabe,
- eine auf der Nabe um die Drehachse des Riemenscheibenentkopplers drehbar gelagerte Riemenscheibe,
- eine im Drehmomentfluss zwischen der Riemenscheibe und der Nabe angeordnete Schraubendrehfeder mit angeschliffenen Federenden,
- einen im Drehmomentfluss seitens der Riemenscheibe verlaufenden ersten Federteller mit einer axialen Federanlage für das eine Federende, dessen umfängliche Stirnfläche mit einem Drehanschlag des ersten Federtellers in das Drehmoment übertragendem Kontakt steht,
- und einen mit der Nabe drehfesten zweiten Federteller mit einer axialen Federanlage für das andere Federende, dessen umfängliche Stirnfläche mit einem Drehanschlag des zweiten Federtellers in das Drehmoment übertragendem Kontakt steht.

Riemenscheibenentkoppler, die im Englischen üblicherweise als Decoupler oder Isolator bezeichnet sind, finden sich insbesondere im Nebenaggregate-Riementrieb eines Verbrennungsmotors, um die von dessen Kurbelwelle in den Riementrieb eingeleiteten Drehschwingungen und -ungleichförmigkeiten zu kompensieren. Die Kompensation erfolgt durch die entkoppelnde Wirkung der Schraubendrehfeder, die je nach Ausführung des Riemenscheibenentkopplers das Drehmoment von der Riemenscheibe auf die Nabe und/oder von der Nabe auf die Riemenscheibe elastisch überträgt. Zu den bekannten Ausführungen zählen:

- Riemenscheibenentkoppler, die drehfest mit der Kurbelwelle verbunden sind und Drehmoment von der Kurbelwelle auf den Riemen übertragen. Sie weisen eine Einwegkupplung auf, die im geöffneten Zustand das Überholen des Riemens gegenüber der Kurbelwelle zulässt. Ein derartiger Riemenscheibenentkoppler ist beispielsweise aus der DE 10 2015 202 043 A1 und der WO 2004/011818 A1 bekannt.
- Riemenscheibenentkoppler, die drehfest mit der Welle eines Generators verbunden sind und Drehmoment vom Riemen auf die Generatorwelle übertragen. Sie weisen eine mit der Schraubendrehfeder in Reihe geschaltete Einwegkupplung auf, die im geöffneten Zustand das Überholen der Generatorwelle gegenüber dem Riemen zulassen. Ein derartiger Riemenscheibenentkoppler ist ebenfalls aus der DE 10 2015 202 043 A1 und außerdem aus der EP 0 517 185 A2, der EP 0 980 479 A1, der US 9,759,274 B2 und der US RE45,156 E bekannt. Ein gattungsgemäßer Riemenscheibenentkoppler mit einer Schraubendrehfeder, deren Federenden offensichtlich angeschliffen sind, geht aus der DE 10 2017 004 974 A1 hervor.
- Riemenscheibenentkoppler, die drehfest mit der Welle eines Startergenerators verbunden sind und je nach Betriebsmodus des Startergenerators Drehmoment vom Riemen auf die Generatorwelle oder mit umgekehrtem Drehsinn Drehmoment von der Generatorwelle auf den Riemen übertragen. Ein derartiger Riemenscheibenentkoppler ist beispielsweise aus der DE 10 2016 211 141 A1 und der EP 1 730 425 B1 bekannt.

Die obengenannte EP 0 517 185 A2 offenbart einen Riemenscheibenentkoppler, der mittels einer Bohrung in der Riemenscheibe ausgewuchtet ist.

Die obengenannte EP 0 980 479 A1 offenbart einen Riemenscheibenentkoppler mit zwei Bandfedern, deren entgegengerichtete Anordnung die Unwucht einer einzigen Feder kompensieren soll.

Der vorliegenden Erfindung liegt die Aufgabe zugrunde, das Betriebsverhalten eines Riemenscheibenentkopplers der eingangs genannten Art konstruktiv zu verbessern.

Die Lösung hierfür ergibt sich aus den Merkmalen des Anspruchs 1. Demnach soll die Nabe eine Unwucht haben, die eine aus dem Anschliff der Federenden resultierende Unwucht der Schraubendrehfeder derart kompensiert, dass bei drehmomentfreier Schraubendrehfeder für die Federunwucht $\vec{U}s$ und die Nabenunwucht $\vec{U}b$ die Beziehung gilt:

$$\left|\vec{U}s + \vec{U}b\right| < \left|\vec{U}s\right|$$

Erfindungsgemäß wird also die mit dem Anschliff der Federenden einhergehende Unwucht der Schraubendrehfeder und damit des Riemenscheibenentkopplers dadurch reduziert (und idealerweise eliminiert), dass die Nabe ebenfalls eine Unwucht aufweist. Dabei ist der Unwuchtsvektor der Nabe hinsichtlich Betrag und Richtung so auf den Unwuchtsvektor der Schraubendrehfeder abgestimmt, dass der Betrag der addierten Vektoren $\vec{U}s$ und $\vec{U}b$ kleiner als der Betrag der Federunwucht $\vec{U}s$ ist und folglich die Unwucht des so ausgewuchteten Riemenscheibenentkopplers deutlich reduziert ist.

Der ausgewuchtete Riemenscheibenentkoppler weist ein deutlich verbessertes Schwingungsverhalten auf, das insbesondere im betrieblichen Anwendungsfall mit vergleichsweise hoher Generatordrehzahl zu deutlich niedrigeren Belastungen der Generatorlagerung führt.

Die Nabenunwucht $\ddot{U}$b kann grundsätzlich von jeder Stelle der Nabe ausgehen. Eine bevorzugte Stelle ist jedoch der mit der Nabe drehfeste Federteller, dessen Durchmesser gegenüber dem übrigen Rohrabschnitt der Nabe vergleichsweise groß ist, so dass eine ungleichmäßige Massenverteilung des Federtellers mit einer dementsprechend großen Unwuchtwirkung einhergeht. Eine besonders bevorzugte Stelle ist dabei die axiale Federanlage, die bei geeigneter Formgebung ein besonders erfolgreiches Auswuchtergebnis ermöglicht.

Weitere Merkmale der Erfindung ergeben sich aus der nachfolgenden Beschreibung und aus den Zeichnungen, in denen Ausführungsbeispiele für einen erfindungsgemäßen Riemenscheibenentkoppler zum Anbau an den Generator eines Nebenaggregate-Riementrieb einer Brennkraftmaschine dargestellt sind. Es zeigen.

Figur 1     den Riementrieb in schematischer Darstellung;

Figur 2     den Riemenscheibenentkoppler in perspektivisch explodierter Darstellung;

Figur 3     eine schematische Draufsicht auf die Schraubendrehfeder des Riemenscheibenentkopplers;

Figuren 4     jeweils in schematischer Darstellung die Rampenform der axialen Federanlage am zweiten Federteller: a) ununterbrochene Rampenform gemäß Stand der Technik, b) unterbrochene Rampenform mit drei Kreisringstücken und c) unterbrochene Rampenform mit zwei Kreisringstücken;

Figur 5     die Unwuchten der Schraubendrehfeder und der Naben mit den Rampenformen gemäß Figur 4 in Vektordarstellung;

Figuren 6     die Unwuchtpaare mit den Rampenformen a), b) und c) gemäß den Figuren 4 und 5 als Vektoraddition;

Figur 7     eine erste perspektivische Draufsicht auf den Federteller gemäß Figur 4b;

Figur 8     eine zweite perspektivische Draufsicht auf den Federteller gemäß Figur 4b;

Figur 9     eine dritte perspektivische Draufsicht auf den Federteller gemäß Figur 4b;

Figur 10     die axiale Federanlage des Federtellers gemäß den Figuren 7 bis 9 mit Bemaßung.

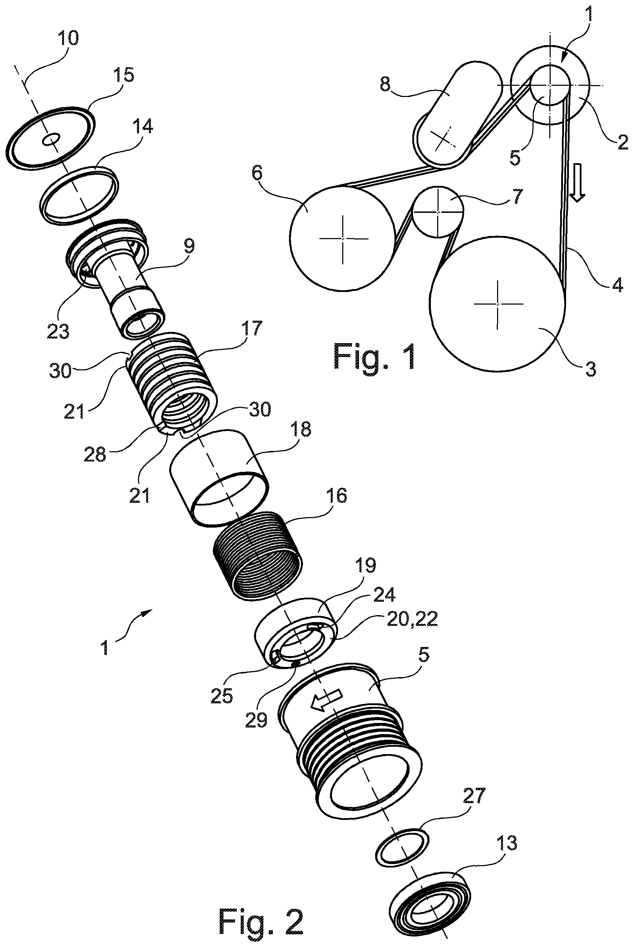

Der erfindungsgemäße Riemenscheibenentkoppler 1 ist gemäß Figur 1 auf dem Generator 2 eines Riementriebs einer Brennkraftmaschine angeordnet. Der von der Riemenscheibe 3 der Kurbelwelle angetriebene Riemen 4 umschlingt die Riemenscheibe 5 des Riemenscheibenentkopplers 1, die Riemenscheibe 6 eines Klimakompressors und eine Umlenkrolle 7. Das Vorspannen des Riemens 4 erfolgt mittels eines Riemenspanners 8.

Die Figuren 2 und 7 bis 9 zeigen den Riemenscheibenentkoppler 1 in explodierter Darstellung bzw. eine erfindungsgemäße Nabe 9 als Einzelteil. Die Riemenscheibe 5, deren vom Riemen 4 umschlungene Außenmantelfläche der Poly-V-Form des Riemens 4 entsprechend profiliert ist, wird vom Riemen 4 in der in Figur 2 eingezeichneten Drehrichtung angetrieben. Die Riemenscheibe 5 ist hohlzylindrisch und um die Drehachse 10 des Riemenscheibenentkopplers 1 drehbar auf der Nabe 9 gelagert, die fest mit der Welle des Generators 2 verschraubt wird. Hierzu hat die Nabe 9 im Mittelabschnitt ein Innengewinde 11 und am generatorfernen, vorderen Endabschnitt einen Innenvielzahn 12 als Eingriffskontur für das Schraubwerkzeug. Die Lagerung der Riemenscheibe 5 auf der Nabe 9 erfolgt am generatorseitigen Ende radial und axial mittels eines Wälzlagers und am generatorfernen Ende radial mittels eines Gleitlagers. Das Wälzlager ist ein einreihiges und beidseitig abgedichtetes Kugellager 13, und das Gleitlager ist ein Radiallagerring 14 aus Polyamid, der mit dem Innendurchmesser der Riemenscheibe 5 in unmittelbarem Gleitkontakt steht.

Die Riemenscheibe 5 hat am generatorfernen Ende eine im Durchmesser gestufte Erweiterung, in die nach dem Verschrauben der Nabe 9 auf die Generatorwelle eine Schutzkappe 15 eingeschnappt wird.

Die für die Funktion des Riemenscheibenentkopplers 1 wesentlichen Komponenten sind eine als Schlingband 16 ausgebildete Einwegkupplung und eine Schraubendrehfeder 17, die bezüglich des Drehmomentflusses von der Riemenscheibe 5 auf die Nabe 9 mit dem Schlingband 16 in Reihe geschaltet ist. Das Schlingband 16 und die Schraubendrehfeder 17 erstrecken sich koaxial zueinander in Richtung der Drehachse 10, wobei das Schlingband 16 radial zwischen der Riemenscheibe 5 und der Schraubendrehfeder 17 angeordnet ist und folglich die Schraubendrehfeder 17 umschließt.

Das Schlingband 16 befindet sich im geschlossenen Kupplungszustand, wenn die Schraubendrehfeder 17 Drehmoment in einem ersten Drehsinn gemäß der eingezeichneten Pfeilrichtung von der Riemenscheibe 5 auf die Nabe 9 überträgt. Dabei werden Drehschwingungen der Riemenscheibe 5 infolge der entkoppelnden Elastizität der Schraubendrehfeder 17 in stark geglättetem Umfang auf die Nabe 9 übertragen. Sowohl das rechts gewickelte Schlingband 16 als auch die links gewickelte Schraubendrehfeder 17 haben beidseitig schenkellose Enden, die das Schlingband 16 bzw. die Schraubendrehfeder 17 bei der Übertragung des Drehmoments auf die Generatorwelle in Wickelöffnungsrichtung belasten und dabei radial aufweiten. Dabei verspannt sich das im Drehmomentfluss seitens der Riemenscheibe 5 verlaufende erste Schlingbandende gegen die Innenmantelfläche einer zylindrischen Antriebshülse 18, die in der Riemenscheibe 5 mittels eines Pressverbands drehbefestigt ist. Das im Drehmomentfluss seitens der Schraubendrehfeder 17 verlaufende zweite Schlingbandende verspannt sich gegen die Innenmantelfläche einer Mitnehmerhülse 19, die gegenüber der Riemenscheibe 5 und der Nabe 9 um die Drehachse 10 drehbar in der Antriebshülse 18 gelagert ist. Die Mitnehmerhülse 19 ist mit einem Boden 20 als einstückiges Blechumformteil hergestellt und rotiert im wesentlichen unwuchtfrei.

Die Schraubendrehfeder 17 liegt axial mit deren Federenden 21 an Federtellern 22 und 23 an. Der antriebseitige, d.h. der im Drehmomentfluss seitens der Riemenscheibe 5 verlaufende erste Federteller 22 ist durch den Boden 20 gebildet. Der abtriebseitige, d.h. der im Drehmomentfluss seitens der Nabe 9 verlaufende zweite Federteller 23 ist drehfest mit der Nabe 9 verbunden und vorliegend drehfester Teil der Nabe 9.

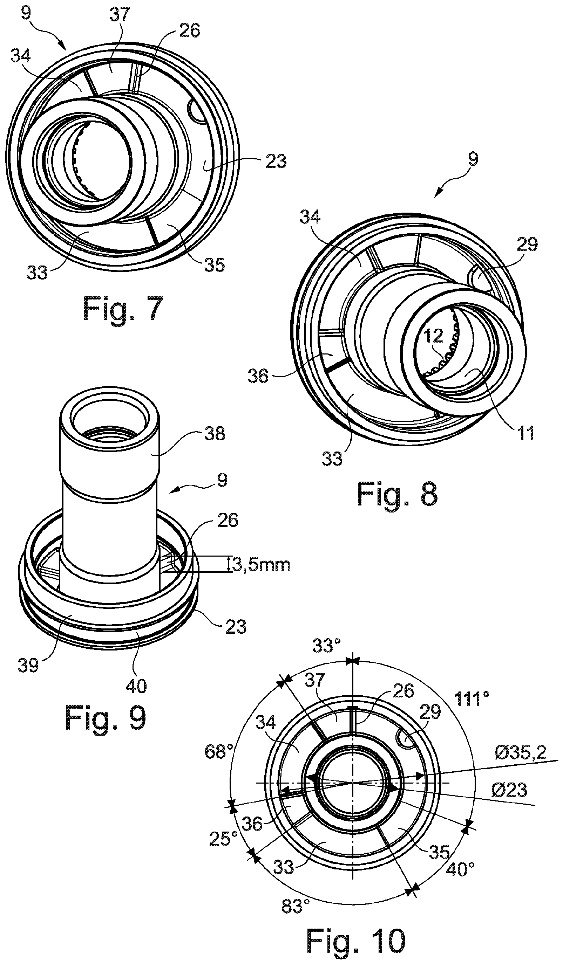

Die Federteller 22, 23 haben der axial stirnseitigen Kontur der Schraubendrehfeder 17 entsprechend axial rampenförmig ansteigende und an umfänglichen Drehanschlägen zurückspringende Federanlagen. Die axiale Federanlage der Mitnehmerhülse 19 ist durch mehrere in den Boden 20 eingeformte Vorsprünge 24 und 25 gebildet, von denen der höchste Vorsprung 25 den Drehanschlag des ersten Federtellers 22 bildet. Der Drehanschlag 26 des zweiten Federtellers 23 ist den Figuren 7 bis 9 entnehmbar. Die auf die Mitnehmerhülse 19 wirkenden Axialkräfte der Schraubendrehfeder 17 werden über einen Gleitlagerring 27 am Innenring des Kugellagers 13 abgestützt.

Die Einleitung des auf die Generatorwelle übertragenen Drehmoments in die Schraubendrehfeder 17 erfolgt antriebseitig über den Druckkontakt des Drehanschlags 25 an der Mitnehmerhülse 19 mit der umfänglichen Stirnfläche 28 des einen Federendes 21. Die abtriebseitige Drehmomentübertragung erfolgt über den Druckkontakt der umfänglichen Stirnfläche 28 des anderen Federendes 21 mit dem Drehanschlag 26 des zweiten Federtellers 23.

Im geöffneten Kupplungszustand rutscht das Schlingband 16 in der Antriebshülse 18 und/oder in der Mitnehmerhülse 19 durch und ermöglicht ein Überholen der (trägen) Generatorwelle und der darauf befestigten Nabe 9 gegenüber der Riemenscheibe 5. Das der Gleitreibung zwischen den beiden durchrutschenden Kontaktpartnern entsprechende Schleppmoment wird durch die Schraubendrehfeder 17 von der Nabe 9 auf die Riemenscheibe 5 in einem zweiten Drehsinn übertragen, der dem ersten Drehsinn entgegen gerichtet ist. Das Schleppmoment beaufschlagt daher die Federenden 21 im Sinne einer sich umfänglich von den zugehörigen Drehanschlägen 25, 26 beabstandenden Relativverdrehung ihrer umfänglichen Stirnflächen 28. Dieser unerwünschte Rampenhochlauf der Schraubendrehfeder 17 wird formschlüssig dadurch verhindert, dass beide Federteller 22, 23 im Bereich ihrer axialen Federanlagen mit Vorsprüngen 29 versehen sind (s. Figur 8), die in jeweils zugehörige Aussparungen 30 der Schraubendrehfeder 17 eingreifen.

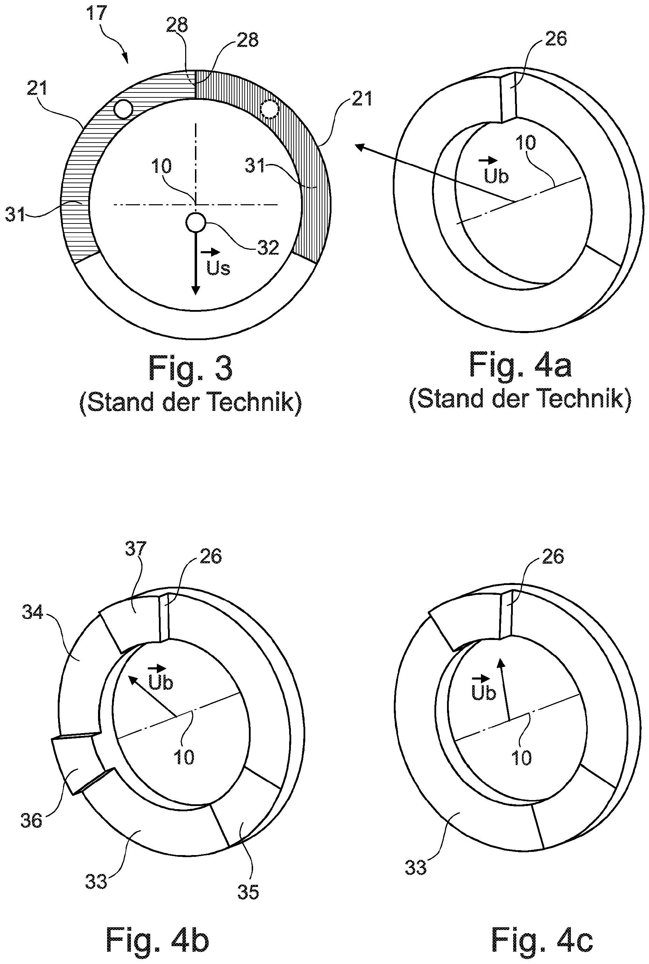

Figur 3 zeigt die Schraubendrehfeder 17 in einer schematischen Draufsicht auf die angeschliffenen Federenden 21. Der für die Federvorder- und rückseite jeweils schraffiert dargestellte Anschliff 31 ist bekanntlich so, dass die axialen Stirnflächen der Federenden 21 im angeschliffenen Umfangsbereich in einer zur Drehachse 10 senkrechten Ebene verlaufen. Die Windungsanzahl der Schraubendrehfeder 17 ist ganzzahlig, und das Anschleifen der Federenden 21 geht mit lokalen Massenreduzierungen einher, die jeweils durch einen weißen Kreis symbolisiert sind. Die dementsprechend exzentrische Lage des Federmassenschwerpunkts 32 und die damit einhergehende Federunwucht $\vec{U}s$ sind durch den schwarzen Kreis bzw. den davon ausgehenden Unwuchtvektor symbolisiert. Diese Betrachtung gilt auch bei den nachfolgenden Ausführungen stets für die drehmomentfreie, d.h. betrieblich nicht tordierte Schraubendrehfeder 17.

Das Auswuchten des Riemenscheibenentkopplers 1 erfolgt erfindungsgemäß mit einer an der Nabe 9 angebrachten Unwucht, die die Federunwucht $\vec{U}s$ so (teilweise) kompensiert, dass die resultierende Unwucht kleiner als eine maximal zulässige Unwucht des Riemenscheibenentkopplers 1 ist. Die zulässige Unwucht beträgt typischerweise 40 gmm.

Die in den Figuren 4 mit $\vec{U}b$ eingezeichnete Nabenunwucht wird in den nachfolgend erläuterten Ausführungsbeispielen durch die Formgebung des zweiten Federtellers 23 und konkret durch die Formgebung der axialen Federanlage erzeugt. Die Figuren 4 zeigen jeweils die Federanlage schematisch als Kreisring, wobei Figur 4a eine im Wesentlichen aus der DE 10 2015 202 043 A1 oder der US RE45,156 E bekannte Federanlage und die Figuren 4b und 4c die Federanlagen erfindungsgemäß auswuchtender Federteller 23 repräsentieren. Die Federanlagen sind jeweils - ausgehend vom Drehanschlag 26 - bis zu einem Umfangswinkel von 111° (s. Figur 10) entsprechend dem angeschliffenen Federende 21 axial rampenfrei und steigen im Umfangsbereich zwischen 111° und 360° entsprechend den ungeschliffenen Federwindungen axial rampenförmig um das in Figur 9 eingezeichnete Axialmaß des Drehanschlags 26 an.

Figur 4a: die axiale Federanlage ist über dem gesamten Umfang des Kreisrings ununterbrochen.

Figur 4b: die axiale Federanlage ist im axial rampenförmigen Umfangsbereich zwischen 111° und 360° durch zwei Ausnehmungen 33 und 34 unterbrochen, die die Schraubendrehfeder 17 freitragend überspannt. Der Boden der Ausnehmungen 33, 34 befindet sich in einer Ebene mit dem axial rampenfreien Umfangsbereich zwischen 0° und 111°. Die Form der Ausnehmungen 33, 34 ist derart, dass die axial rampenförmig ansteigende Federanlage drei umfänglich um die Ausnehmungen 33, 34 beabstandete Kreisringstücke 35, 36 und 37 umfasst. Die aus den Ausnehmungen 33, 34 resultierende Nabenunwucht $\vec{U}b$ ist gegenüber dem Unwuchtvektor gemäß Figur 4a deutlich kleiner und zum Drehanschlag 26 hin verdreht.

Figur 4c: die axiale Federanlage ist im axial rampenförmigen Umfangsbereich zwischen 111° und 360° durch lediglich eine Ausnehmung 33 unterbrochen. Die daraus resultierende Nabenunwucht $\vec{U}b$ ist gegenüber dem Unwuchtvektor gemäß Figur 4b geringfügig kleiner und noch weiter zum Drehanschlag 26 hin verdreht.

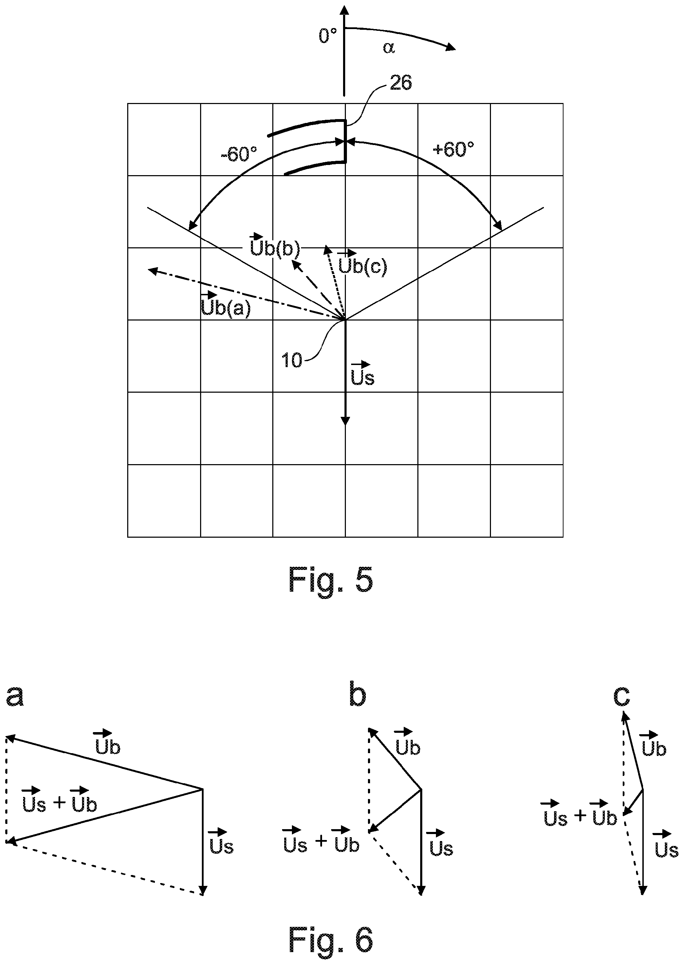

Die Figuren 5 und 6 veranschaulichen die erfindungsgemäße Reduzierung der auf dem Federanschliff beruhenden Unwucht des Riemenscheibenentkopplers 1 mit Hilfe einer grafischen Vektordarstellung der Unwuchten $\vec{U}s$, $\vec{U}b$ bzw. jeweils deren Summe $\vec{U}s + \vec{U}b$.

Die in Klammern gesetzten Buchstaben a bis c beziehen sich jeweils auf die axialen Federanlagen gemäß den Figuren 4a bis 4c.

Figur 5 zeigt die in den Figuren 3 und 4 eingezeichneten und zuvor erläuterten Unwuchtvektoren in Abhängigkeit eines auf die Drehachse 10 bezogenen Umfangswinkels, der beim Drehanschlag 26 $\alpha=0°$ beträgt. Anders als die bekannte Nabenunwucht $\vec{U}b$ (a) sind die erfindungsgemäß aus den Ausnehmungen 33, 34 resultierenden Nabenunwuchten $\vec{U}b$ (b) und $\vec{U}b$ (c) innerhalb eines Kreissektors von $\alpha=\pm 60°$ um die Drehachse 10 ausgerichtet und wirken der zu $\alpha=180°$ hin ausgerichteten Federunwucht $\vec{U}s$ der (drehmomentfreien) Schraubendrehfeder 17 deutlich entgegen.

Die zugehörige Vektoraddition gemäß Figur 6a zeigt deutlich, dass die ununterbrochene Rampenform der bekannten Federanlage gemäß Figur 4a sogar zu einer addierten Unwucht $\vec{U}s + \vec{U}b$ führt, deren Betrag $|\vec{U}s + \vec{U}b|$ deutlich größer als $|\vec{U}s|$ und gemäß der nachfolgenden Tabelle näherungsweise doppelt so groß ist (45,3 gmm vs. 23,7 gmm). Die Vektoraddition gemäß den Figuren 6b und 6c und die zugehörigen Tabellenwerte verdeutlichen hingegen die signifikante Auswuchtwirkung der erfindungsgemäßen Nabenunwuchten $\vec{U}b(b)$ und $\vec{U}b(c)$ derart, dass dort zumindest bei betrieblich nicht tordierter Schraubendrehfeder 17 die Beziehung der Vektorbeträge gilt: $|\vec{U}s + \vec{U}b| = 15,5$ gmm bzw. 7,8 $g_{mm} < |\vec{U}s| = 23,7$ gmm.

| | Unwucht $\vec{U}$ | |
|---|---|---|
| | Betrag [gmm] | Richtung [$\alpha$] |
| Schraubendrehfeder | 23,7 | 180° |
| Nabe a | 45,2 | 285° (-75°) |
| Feder + Nabe a | 45,3 | 255° |
| Nabe b | 18,1 | 319° (-41°) |
| Feder + Nabe b | 15,5 | 230° |
| Nabe c | 17,5 | 346° (-14°) |
| Feder + Nabe c | 7,8 | 212° |

Die betriebliche Torsion der Schraubendrehfeder 17 bewirkt, dass sich in den Figuren 5 und 6 die Federunwucht $\vec{U}s$ gegen den Uhrzeigersinn verdreht und kleiner wird. Jedoch kann sich die Vektorsumme $\vec{U}s + \vec{U}b$ nur bei sehr großem Torsionswinkel so ändern, dass für deren Betrag gilt: $|\vec{U}s + \vec{U}b| > |\vec{U}s|$

Die Figuren 7 bis 10 zeigen eine Ausführung einer erfindungsgemäßen Nabe 9 gemäß Figur 4b in perspektivischen und in einer bemaßten Darstellung. Die Nabe 9 ist mit dem daran angeformten zweiten Federteller 23, den darin eingeformten Ausnehmungen 33 und 34 sowie dem Vorsprung 29 als Fließpressteil einstückig hergestellt. Die Ausnehmungen 33, 34 sind im Hinblick auf eine ausreichend große Axialabstützung der Schraubendrehfeder 17 so dimensioniert, dass alle drei axial rampenförmig ansteigenden Kreisringstücke 35, 36, 37 eine Bogenlänge von $\beta > 20°$ aufweisen.

Die die auswuchtende Nabenunwucht $\vec{U}b$ erzeugenden Ausnehmungen 33, 34 haben einen weiteren wesentlichen Vorteil, der den Herstellprozess der Nabe 9 betrifft. Dieser Vorteil besteht darin, dass das Fließpressen der axialen Rampenform der Federanlage bei den vergleichsweisen kurzen Bogenlängen der Kreisringstücke 35, 36, 37 mit einer erheblich niedrigeren Schiefstellung (Rechtwinkligkeitsabweichung) des sich gegenüber dem Federteller 23 axial erhebenden Rohrabschnitts 38 der Nabe 9 einhergeht.

Die durch die Ausnehmungen 33, 34 erzeugte Nabenunwucht $\vec{U}b$ kann optional durch eine Massenreduzierung am Außenumfang des Federtellers 23 erhöht werden. Dies kann beispielsweise durch eine oder mehrere (vorliegend nicht existente) Querbohrungen erfolgen, die in einem Winkelbereich von $\alpha=90°$ bis $\alpha=180°$ vom Drehanschlag 26 entfernt am Kragen 39 neben der Nut 40 für den Radiallagerring 14 eingebracht sind.

## Patentansprüche

1. Riemenscheibenentkoppler (1) zur Drehmomentübertragung zwischen dem Riemen (4) eines Riementriebs und einer damit in Antriebsverbindung stehenden Welle, aufweisend:

   - eine an der Welle zu befestigende Nabe (9),
   - eine auf der Nabe (9) um die Drehachse (10) des Riemenscheibenentkopplers (1) drehbar gelagerte Riemenscheibe (5),
   - eine im Drehmomentfluss zwischen der Riemenscheibe (5) und der Nabe (9) angeordnete Schraubendrehfeder (17) mit angeschliffenen Federenden (21),
   - einen im Drehmomentfluss seitens der Riemenscheibe (5) verlaufenden ersten Federteller (22) mit einer axialen Federanlage für das eine Federende (21), dessen umfängliche Stirnfläche (28) mit einem Drehanschlag (25) des ersten Federtellers (22) in das Drehmoment übertragendem Kontakt steht,
   - und einen mit der Nabe (9) drehfesten zweiten Federteller (23) mit einer axialen Federanlage für das andere Federende (21), dessen umfängliche Stirnfläche (28) mit einem Drehanschlag (26) des zweiten Federtellers (23) in das Drehmoment übertragendem Kontakt steht,

   dadurch gekennzeichnet, dass die Nabe (9) eine Unwucht hat, die eine aus dem Anschliff (31) der Federenden (21) resultierende Unwucht der Schraubendrehfeder (17) derart kompensiert, dass bei drehmomentfreier Schraubendrehfeder (17) für die Federunwucht $\vec{U}s$ und die Nabenunwucht $\vec{U}b$ die Beziehung gilt:

$$\left|\vec{U}s + \vec{U}b\right| < \left|\vec{U}s\right|$$

2. Riemenscheibenentkoppler (1) nach Anspruch 1, dadurch gekennzeichnet, dass die Nabenunwucht $\vec{U}b$ innerhalb eines Kreissektors von $\alpha=\pm\,60°$ um die Drehachse (10) ausgerichtet ist, wenn jeweils bezüglich des Kreissektors die Richtung des Drehanschlags (26) des zweiten Federtellers (23) $\alpha=0°$ beträgt und bei drehmomentfreier Schraubendrehfeder (17) die Richtung der Federunwucht $\vec{U}s$ $\alpha=180°$ beträgt.

3. Riemenscheibenentkoppler (1) nach Anspruch 1 oder 2, dadurch gekennzeichnet, dass die axiale Federanlage des zweiten Federtellers (23) um das Axialmaß seines Drehanschlags (26) axial rampenförmig ansteigt, wobei die Nabenunwucht $\vec{U}b$ aus einer oder mehreren Ausnehmungen (33, 34) resultiert, die die Rampenform der axialen Federanlage unterbrechen.

4. Riemenscheibenentkoppler (1) nach Anspruch 3, dadurch gekennzeichnet, dass die axiale Federanlage des zweiten Federtellers (23) Kreisringstücke (35, 36, 37) umfasst, die umfänglich um die Ausnehmungen (33, 34) voneinander beabstandet sind.

5. Riemenscheibenentkoppler (1) nach Anspruch 4, dadurch gekennzeichnet, dass für die Bogenlänge $\beta$ aller Kreisringstücke (35, 36, 37) gilt: $\beta > 20°$.

6. Riemenscheibenentkoppler (1) nach einem der Ansprüche 3 bis 5, dadurch gekennzeichnet, dass die Nabe (9) mit dem daran angeformten zweiten Federteller (23) und den darin eingeformten Ausnehmungen (33, 34) ein Fließpressteil ist.

## Claims

1. A belt pulley decoupler (1) for transmitting torque between the belt (4) of a belt drive and a shaft in driving connection therewith, having:

- a hub (9) to be fastened to the shaft,
- a belt pulley (5) rotatably mounted on the hub (9) about the axis of rotation (10) of the belt pulley decoupler (1),
- a helical torsion spring (17) arranged in the torque flow between the belt pulley (5) and the hub (9) and having ground spring ends (21),
- a first spring plate (22) which extends in the torque flow on the side of the belt pulley (5) and has an axial spring support for one spring end (21), the circumferential end face (28) of which contacts a rotational stop (25) of the first spring plate (22) in a torque-transmitting manner,
- and a second spring plate (23) which is rotationally fixed to the hub (9) and has an axial spring support for the other spring end (21), the circumferential end face (28) of which contacts a rotational stop (26) of the second spring plate (23) in a torque-transmitting manner,

**characterised in that** the hub (9) has an imbalance which compensates for an imbalance in the helical torsion spring (17) resulting from the ground portion (31) of the spring ends (21) in such a way that with a torque-free helical torsion spring (17) the following relationship applies for the spring imbalance $\vec{U}s$ and the hub imbalance $\vec{U}b$:

$$|\vec{U}s + \vec{U}b| < |\vec{U}s|$$

2. The belt pulley decoupler (1) according to claim 1, **characterised in that** the hub imbalance $\vec{U}b$ is aligned within a circle sector of $\alpha = \pm\,60°$ about the axis of rotation (10) if, in each case with respect to the circle sector, the direction of the rotational stop (26) of the second spring plate (23) is $\alpha = 0°$ and, with a torque-free helical torsion spring (17), the direction of the spring imbalance $\vec{U}s$ is $\alpha = 180°$.

3. The belt pulley decoupler (1) according to claim 1 or 2, **characterised in that** the axial spring support of the second spring plate (23) rises axially in a ramp shape around the axial dimension of its rotational stop (26), wherein the hub imbalance $\vec{U}b$ results from one or more recesses (33, 34) which interrupt the ramp shape of the axial spring support.

4. The belt pulley decoupler (1) according to claim 3, **characterised in that** the axial spring support of the second spring plate (23) comprises circular ring pieces (35, 36, 37) circumferentially spaced apart from each other around the recesses (33, 34).

5. The belt pulley decoupler (1) according to claim 4, **characterised in that** the arc length $\beta$ of all the circular ring pieces (35, 36, 37) is: $\beta > 20°$.

6. The belt pulley decoupler (1) according to any one of claims 3 to 5, **characterised in that** the hub (9) with the second spring plate (23) formed thereon and the recesses (33, 34) formed therein, is an extruded part.

**Revendications**

1. Découpleur de poulie à courroie (1) destiné à transmettre un couple entre la courroie (4) d'un entraînement par courroie et un arbre en liaison par entraînement avec celle-ci, présentant :

- un moyeu (9) à fixer sur l'arbre,
- une poulie à courroie (5) montée rotative, autour de l'axe de rotation (10) du découpleur de poulie à courroie (1), sur le moyeu (9),
- un ressort de torsion (17) hélicoïdal, disposé dans le flux de couple entre la poulie à courroie (5) et le moyeu (9), comportant des extrémités du ressort (21) affûtées,
- une première coupelle de ressort (22) s'étendant dans le flux de couple côté poulie à courroie (5), comportant une installation axiale de ressort pour l'une des extrémités du ressort (21), dont la face frontale (28) circonférentielle est en contact de manière à transmettre le couple avec une butée de rotation (25) de la première coupelle de ressort (22),
- et une seconde coupelle de ressort (23) solidaire en rotation avec le moyeu (9), comportant une installation axiale de ressort pour l'autre extrémité du ressort (21), dont la face frontale (28) circonférentielle est en contact de manière à transmettre le couple avec une butée de rotation (26) de la seconde coupelle de ressort (23),

**caractérisé en ce que** le moyeu (9) comporte un balourd, lequel compense un balourd du ressort de torsion (17) hélicoïdal, résultant de l'affûtage (31) des extrémités du ressort (21), de telle sorte que, en cas de ressort de torsion (17) hélicoïdal sans couple, pour le balourd du ressort $\vec{U}s$ et le balourd du moyeu $\vec{U}b$, s'applique la relation suivante :

$$|\vec{U}s + \vec{U}b| < |\vec{U}s|$$

2. Découpleur de poulie à courroie (1) selon la revendication 1, **caractérisé en ce que** le balourd du moyeu $\vec{U}b$ est aligné dans un secteur circulaire de $\alpha = \pm\ 60\ °$ autour de l'axe de rotation (10) lorsque, respectivement par rapport au secteur circulaire, la direction de la butée de rotation (26) de la seconde coupelle de ressort (23) est $\alpha = 0\ °$ et, en cas de ressort de torsion (17) hélicoïdal sans couple, la direction du balourd du ressort $\vec{U}s$ est $\alpha = 180\ °$.

3. Découpleur de poulie à courroie (1) selon la revendication 1 ou 2, **caractérisé en ce que** l'installation axiale de ressort de la seconde coupelle de ressort (23) augmente axialement en forme de rampe de la dimension axiale de sa butée de rotation (26), dans lequel le balourd du moyeu $\vec{U}b$ résulte d'au moins un évidement (33, 34), lequel interrompt la forme en rampe de l'installation axiale de ressort.

4. Découpleur de poulie à courroie (1) selon la revendication 3, **caractérisé en ce que** l'installation axiale de ressort de la seconde coupelle de ressort (23) comprend des pièces (35, 36, 37) annulaires, lesquelles sont espacées circonférentiellement les unes des autres autour des évidements (33, 34).

5. Découpleur à poulie à courroie (1) selon la revendication 4, **caractérisé en ce que** la longueur d'arc $\beta$ de toutes les pièces (35, 36, 37) annulaires est : $\beta > 20\ °$.

6. Découpleur de poulie à courroie (1) selon l'une quelconque des revendications 3 à 5, **caractérisé en ce que** le moyeu (9), comportant la seconde coupelle de ressort (23) formée sur celui-ci et les évidements (33, 34) formés à l'intérieur de celui-ci, est une pièce extrudée.

Fig. 1

Fig. 2

## Fig. 3
### (Stand der Technik)

## Fig. 4a
### (Stand der Technik)

## Fig. 4b

## Fig. 4c

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015202043 A1
- WO 2004011818 A1
- EP 0517185 A2
- EP 0980479 A1
- US 9759274 B2
- US 45156 E
- DE 102017004974 A1
- DE 102016211141 A1
- EP 1730425 B1